# DEMANDE DE BREVET EUROPEEN

(11) **EP 1 236 980 A1**
(43) Date de publication de la demande: **04.09.2002**
(21) Numéro de dépôt: 02356042.8
(22) Date de dépôt: 01.03.2002
(51) Int. Cl.: G01G 19/16, G01G 23/18, B66C 1/66, B66C 13/16

(54) **Capteur de contraintes pour organe de levage et organe de levage en faisant application**

(30) Priorité: 02.03.2001 FR 0102865
(71) Demandeur: PPM SOCIETE ANONYME:, 71304 Montceau-les-Mines Cédex (FR)
(72) Inventeur: Teixeira, Manuel, 71300 Montceau Les Mines (FR)
(74) Mandataire: Thibault, Jean-Marc

(57) **Abrégé**

Capteur de contraintes pour un engin de levage, en particulier un ensemble avec twistlocks pour le levage de conteneurs, comprenant un organe de levage (16) équipé d'un organe d'accrochage (24) d'une charge dite suspendue (20), un corps de support (46) et un chapeau d'appui (41) qui définissent ensemble au moins une chambre de compression (43) d'un fluide, et des moyens (49) de mesure de la pression au sein de la chambre de compression (43).

## Description

La présente invention concerne le domaine des engins, installations et/ou dispositifs de levage, destinés à la manutention de charges lourdes et elle concerne, plus particulièrement mais non exclusivement, les engins de levage de type mobile et automoteur qui possèdent, en tant qu'équipement de manutention, un palonnier de prise en charge par suspension.

A titre d'application préférée mais non limitative, l'invention vise, plus particulièrement encore, le domaine des engins de levage-manutention de conteneurs, tels que ceux qui sont fréquemment utilisés sur les aires d'embarquement et de débarquement des ports maritimes par lesquels sont reçues et acheminées des charges lourdes et, notamment, des conteneurs de forme parallélépipèdique rectangle qu'il convient de pouvoir déplacer, transporter, lever, abaisser, gerber, avec une grande sécurité.

Dans le domaine général ci-dessus et plus particulièrement celui relevant de l'application maritime, il est habituel de mettre en oeuvre des engins de levage-manutention, généralement automoteurs, du type à chenilles ou à roues, et qui possèdent, sur une superstructure adaptée, un palonnier de suspension, orientable et généralement réglable dans plusieurs directions, de façon à pouvoir être adapté aux gabarits standardisés ou non des charges devant être manutentionnées.

Dans le cas d'application notamment aux conteneurs de transport maritime, le palonnier est adapté en bout d'une poutre ou flèche à caractère télescopique ou non.

De manière à assurer la fonction prévue, il est bien évidemment nécessaire de prévoir des moyens techniques qui permettent d'établir ou de rompre à volonté la liaison structurelle matérielle entre le palonnier de suspension et la charge, notamment le conteneur.

Les moyens techniques succinctement rappelés ci-dessus sont bien connus et peuvent être considérés comme donnant satisfaction pour la fonction essentielle de levage-manutention.

Les tendances actuelles de transport par conteneur font apparaître le recours à des charges de plus en plus lourdes qui sont essentiellement variables d'un conteneur à l'autre, même de gabarit identique. Un problème particulier devant alors être pris en compte est celui de l'appréciation exacte de la charge pondérale de chaque conteneur, de manière à pouvoir déterminer, avec précision, le facteur de sécurité, tant pour l'engin de levage-manutention, que pour le principe de centrage et de chargement, dans le cas notamment d'embarquement sur navire.

C'est la raison pour laquelle il apparaît de plus en plus impératif et incontournable de procéder à un pesage individuel pour chaque prise en charge, de manière à pouvoir apprécier si le facteur de sécurité et de charge pondérale n'est pas dépassé et si des dispositions particulières doivent être considérées pour ce qui concerne le levage, la manutention, l'embarquement, le centrage, voire encore les capacités de gerbage vertical de plusieurs conteneurs de même gabarit.

De telles opérations de pesage sont longues à conduire, exigent des passages sur bascule qui ne sont pas de nature à favoriser une grande aisance de déplacement des engins de levage-manutention, notamment sur les aires d'embarquement, débarquement ou stockage de tels conteneurs, font intervenir fréquemment des opérations de reprise et constituent au total une sujétion importante grevant le bilan économique de la phase de levage-manutention.

Au surplus, ces opérations nécessaires et différentes ne sont pas de nature à fournir une précision convenable, de sorte que la facturation du service attaché à la prestation de levage-manutention s'en trouve pénalisée d'autant.

C'est la raison pour laquelle il a été préconisé d'adapter des moyens d'appréciation de la charge pondérale sur l'engin de levage-manutention, de manière à disposer, immédiatement et en temps réel, d'une information à même de répondre à la préoccupation générale évoquée ci-dessus.

Pour ce faire, il a été, de façon générale, préconisé de mettre en place des moyens de captage de contrainte, par exemple, directement sur les vérins de levage dans le cas d'une flèche, de tels moyens, connus en eux-mêmes, réagissant immédiatement à la charge pondérale que l'engin a pour mission d'élever en suspension.

Les expérimentations qui ont été conduites sur une telle base ont permis de constater que le principe visé ne permettait pas d'obtenir une information suffisamment précise de la charge pondérale portée. Cette imprécision est, vraisemblablement, à mettre au compte de l'éloignement existant entre le point de suspension de la charge, par exemple située en bout de flèche, et les vérins de levage, un tel éloignement induisant, par contrainte mécanique, des distorsions d'appréciation fournissant des évaluations erronées pouvant conduire, par accumulation, à des situations hors normes de sécurité susceptibles de provoquer des accidents préjudiciables au plan humain. De surcroît, une telle imprécision n'est pas non plus acceptable, en considération du coût tarifaire relativement à la prestation de levage-manutention devant être assurée pour le compte d'un tiers.

Il doit être remarqué qu'un problème du même ordre se pose pour la mesure des charges transportées au moyen du crochet de levage d'une grue, par exemple télescopique.

L'objet de l'invention est donc de répondre au besoin qui se fait actuellement sentir de pouvoir disposer, en temps réel, d'une information précise de la charge pondérale soulevée, en ne faisant intervenir que des adaptations des moyens techniques jusqu'à présent réunis pour assumer la charge de levage-manutention à partir des engins de type connu.

Pour atteindre l'objectif ci-dessus, l'invention a pour objet un capteur de contraintes pour un engin de levage et/ou de manutention comprenant un organe de levage équipé d'un organe d'accrochage d'une charge dite suspendue. Selon l'invention, le capteur de contraintes est caractérisé en ce qu'il comprend :
- un corps de support et un chapeau d'appui qui définissent ensemble au moins une chambre de compression d'un fluide et qui sont destinés à être interposés entre l'organe de levage et l'organe d'accrochage,
- des moyens de mesure de la pression au sein de la chambre de compression.

Selon une caractéristique de l'invention, le corps de support et le chapeau d'appui présentent un alésage destiné à recevoir une tige de suspension de l'organe d'accrochage.

Selon une autre caractéristique de l'invention, la chambre de compression présente une forme annulaire. De manière préférée mais non strictement nécessaire, la chambre de compression et l'alésage de réception de la tige de suspension sont alors sensiblement coaxiaux.

L'invention a encore pour objet un organe de levage pour engin de levage-manutention comprenant au moins un corps de fixation équipé d'un organe d'accrochage d'une charge, caractérisé en ce qu'il comprend un capteur de contraintes, selon l'invention, interposé entre le corps de fixation et l'organe d'accrochage.

Selon une forme de réalisation de l'invention, l'organe de levage constitue un verrou peseur d'accrochage tournant pour palonnier de prise en charge d'un engin de levage-manutention d'un conteneur, caractérisé en ce que :
- le corps de fixation comporte des moyens de guidage et d'immobilisation axiale et des moyens de guidage en rotation,
- l'organe d'accrochage comprend une tige de forme générale cylindrique, qui traverse le corps de fixation ainsi que le capteur de contraintes, qui est maintenue par les moyens de guidage et d'immobilisation et qui comporte, extérieurement au corps, un embout d'accouplement avec une transmission d'entraînement en rotation alternée et, à l'opposé, une tête épaulée destinée à coopérer avec une mortaise oblongue offerte par le conteneur.

Selon une autre forme de réalisation de l'invention, l'organe de levage constitue un crochet de grue, caractérisé en ce que :
- le corps de fixation comporte des moyens de guidage et d'immobilisation axiale et des moyens de guidage en rotation,
- l'organe d'accrochage comprend un crochet prolongé par une tige qui traverse le corps et le capteur de contraintes en étant maintenu par les moyens d'immobilisation et de guidage et qui présente, à l'opposé du crochet, une tête d'appui sur le chapeau du capteur de contraintes interposé entre le corps de fixation et l'organe d'accrochage.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une élévation latérale schématique d'un engin de levage-manutention, notamment de conteneurs.

La **fig. 2** est une vue en plan schématique prise sensiblement selon la ligne **II-II** de la **fig. 1**.

La **fig. 3** est une élévation schématique, analogue à la **fig. 1,** mais illustrant une phase de mise en service de l'engin de levage-manutention.

La **fig. 4** est une perspective partielle montrant, à plus grande échelle, un détail de réalisation de l'un des éléments composant l'engin de levage-manutention selon les **fig. 1** à **3.**

La **fig. 5** est une perspective montrant, à plus grande échelle, l'objet de l'invention.

La **fig. 6** est une coupe sensiblement prise selon le plan **VI-VI** de la **fig. 5**.

La **fig. 7** est une élévation partiellement arrachée d'une autre forme de mise en oeuvre d'un capteur de contraintes selon l'invention à un crochet de levage équipant un moufle de grue.

La **fig. 8** est une coupe, analogue à la **fig. 6**, mais illustrant, à plus grande échelle, la mise en oeuvre du capteur de contraintes sur le crochet de grue.

La **fig. 9** illustre la mise en oeuvre du capteur de contraintes, selon l'invention sur un crochet de grue simple sans mouflage.

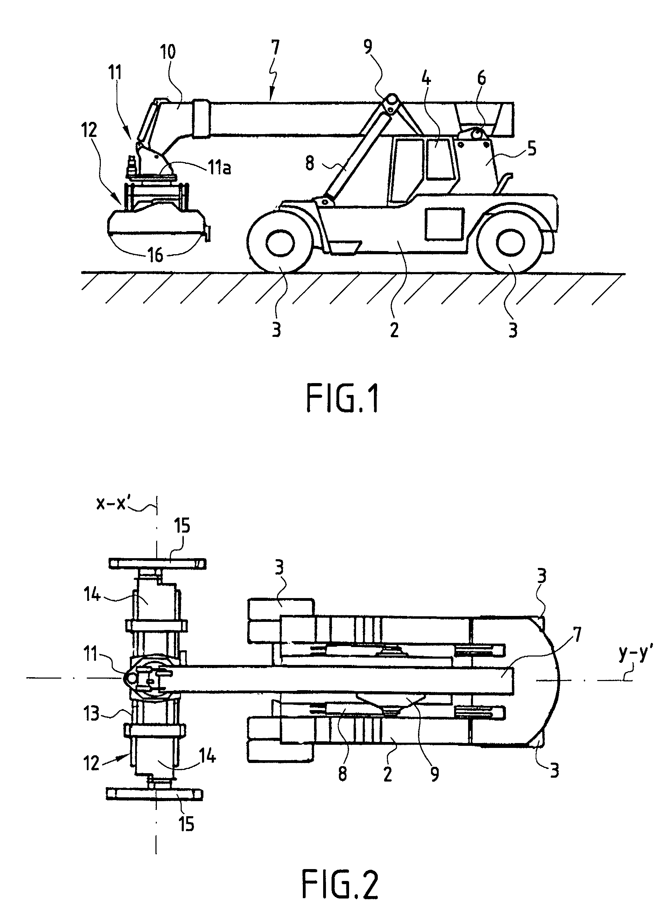

Les **fig. 1** et **2** montrent, à titre d'exemple d'application, un engin de levage-manutention, désigné dans son ensemble par la référence **1.** Un tel engin comprend un châssis **2** porté par des moyens de déplacement autonome, tels que des roues **3** ou encore des chenilles non représentées, de tels moyens étant rendus automoteurs par l'intermédiaire de tout système de motorisation appropriée. Le châssis **2** supporte une cabine de pilotage **4**, ainsi qu'une structure, voire une superstructure porteuse 5 sur laquelle est articulée, par un axe horizontal **6**, une flèche **7** ordinairement orientée dans le plan de symétrie longitudinal du châssis **2**. Il doit, toutefois, être considéré que, dans certains cas, la structure **5** peut être constituée sous la forme d'une tourelle qui est alors orientable sur un axe vertical.

La flèche **7** peut être télescopique ou non et peut être orientée en site par pivotement sur l'axe **6**, par l'intermédiaire d'un ou de plusieurs vérins **8,** généralement hydrauliques, au moins à simple effet, interposés entre un harnais de renforcement **9** et le châssis **2**.

La flèche **7** comporte, en tête de flèche **10,** des moyens **11** de suspension et d'orientation d'un palonnier **12** qui est généralement constitué, comme cela est illustré par la **fig. 2**, par un caisson **13** de forme générale allongée et qui peut être déplacé par une tourelle d'orientation **11a**, de façon que son axe longitudinal **x-x'** fasse un angle quelconque, voire un angle nul, avec l'axe longitudinal **y-y'** de la flèche **7**.

Le caisson **13** porte deux demi-poutres télescopiques **14** opposées, réglables en écartement, généralement mais non obligatoirement, de façon symétrique. Chaque demi-poutre porte, en bout, une joue **15** qui est pourvue, en tant qu'organe de levage, de verrous d'agrippement ou d'accrochage **16**, par exemple au nombre de deux.

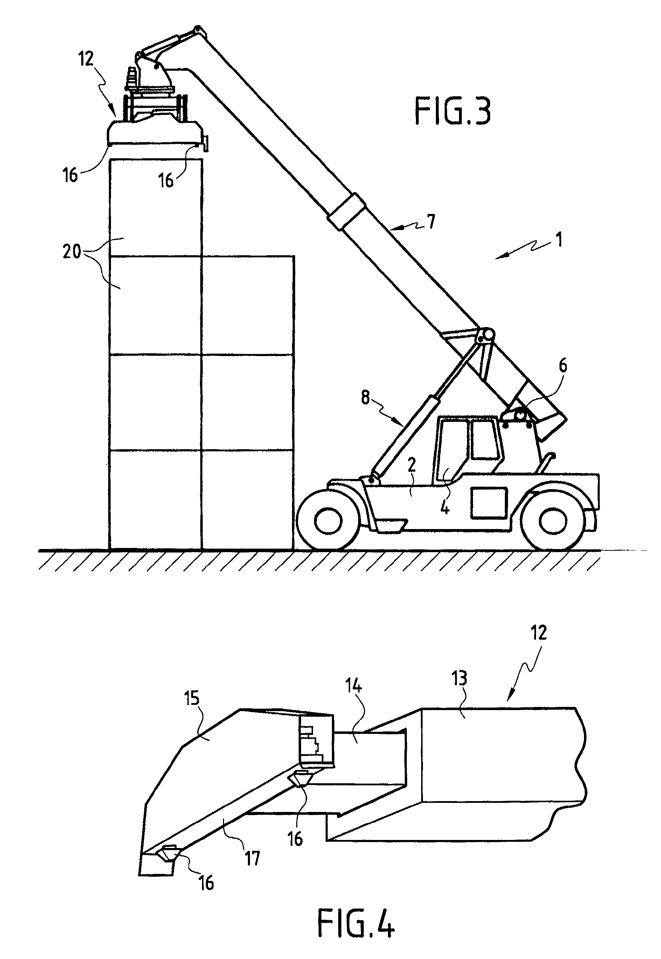

Le palonnier **12** est donc ainsi réglable, au moins en longueur, de façon à pouvoir être adapté au gabarit de conteneurs, tels que **20**, qui doivent être, comme cela est illustré par la **fig. 3**, levés et manutentionnés pour être embarqués ou débarqués ou encore stockés et gerbés relativement à une aire de stockage temporaire, telle que celle constituée par une plate-forme portuaire d'un port d'embarquement-débarquement maritime.

Il doit être considéré que l'exemple ci-dessus n'est donné qu'à titre illustratif, car l'objet de l'invention se rapporte à tout type de palonnier de suspension, de levage, de manutention adapté sur une structure porteuse appropriée, à partir de laquelle une manutention d'une charge par suspension doit être effectuée.

La **fig. 3** met en évidence, dans l'application visée, que, par l'intermédiaire des verrous **16** et par réglage approprié de la longueur de la flèche **7** et de son orientation en site au moins, il est possible d'agripper et de saisir tout conteneur **20**, de façon à en assurer le levage, le transport, voire l'orientation, pour satisfaire aux exigences de manutention. Il doit être remarqué qu'en position de travail, le conteneur **20**, constituant la charge à transporter, se trouve suspendu par l'intermédiaire des verrous ou organes d'accrochage **16** au palonnier **12**.

La **fig. 4** montre, plus en détail, quoique de façon schématique, la constitution partielle du palonnier **12** à partir du caisson **13** supportant l'une des demi-poutres extrêmes **14** en bout de laquelle se trouve disposée la joue **15** s'étendant transversalement à l'axe de la demi-poutre **14** et dont les deux extrémités sont pourvues de deux verrous **16** orientés vers le bas à partir d'une face de référence, telle que **17**, appartenant à la joue **15**.

Il doit être considéré, au sens de l'invention, que la caractéristique constructive d'un palonnier **12** relève de la connaissance de l'homme du métier, de même que les asservissements devant être mis en oeuvre pour assurer éventuellement les fonctionnalités complètes permises par un tel palonnier.

Il doit aussi être considéré que si, au terme des dessins et de l'application particulière visée, un palonnier, tel que **12**, comporte, en tant qu'organes de levage quatre verrous d'agrippement ou d'accrochage **16**, certaines applications peuvent faire intervenir un nombre différent de verrous sans sortir du cadre de l'invention.

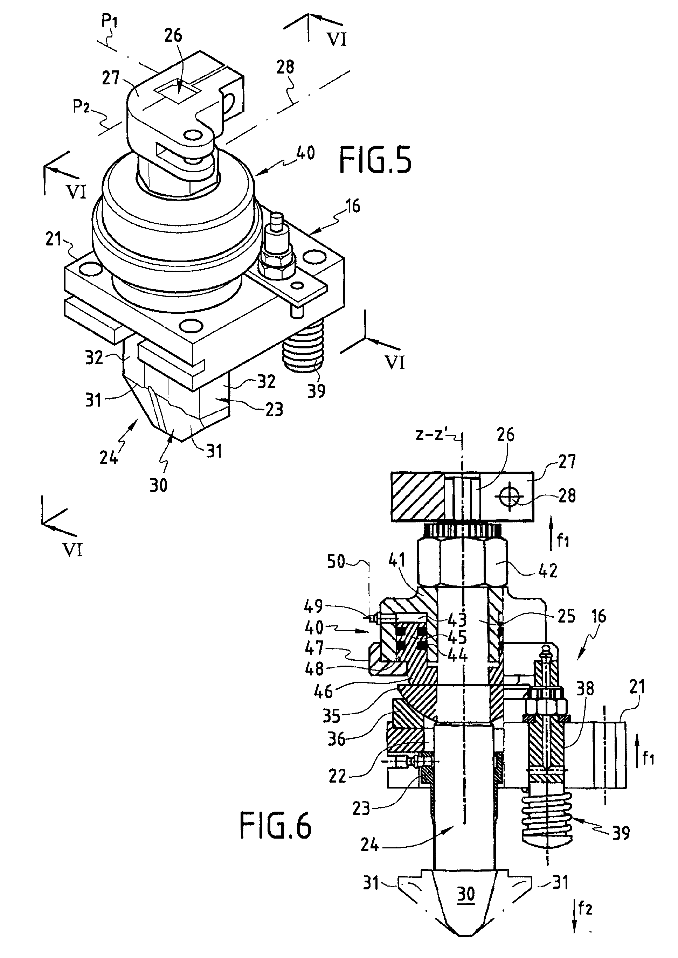

Un verrou d'agrippement, tel que **16**, comprend, comme cela est représenté par les **fig. 5** et **6**, un corps de fixation **21** rendant l'adaptation amovible du verrou 16 par rapport à la joue **15,** dans l'exemple illustré ou à toute structure porteuse qui serait équivalente.

Le corps de fixation **21** délimite un passage traversant **22** qui est garni d'une fourrure de guidage **23** délimitant un alésage de passage pour un organe d'accrochage ou d'agrippement **24** constitué principalement par une tige dite de suspension **25** de forme générale cylindrique. La tige **25** traverse le passage **22** et comporte une première partie terminale adaptée **26** qui est formée par un embout d'accouplement sur lequel est montée une chape **27** à même d'être liée, de façon amovible, à une transmission de commande **28**, généralement constituée par une bielle ou, encore, par la tige de piston d'un vérin pneumatique, hydraulique, électrique ou mécanique. Dans l'exemple d'application visé, la transmission **28** est du type à double effet antagoniste, de manière à pouvoir commander simultanément, en rotation sur leur axe **z-z'**, les tiges **25** constitutives des deux verrous **15** de chaque joue.

Pour des raisons qui ressortent de ce qui suit mais qui sont également connues de la technique, la transmission **28** est conçue de manière à pouvoir commander la rotation de la tige **25** sur une plage angulaire d'environ 90°, d'une position **P**_{**1**}**,** telle qu'illustrée par la **fig. 5**, à une position **P**_{**2**} et inversement.

La partie terminale de la tige **25**, opposée à l'embout **26**, est pourvue d'une tête d'agrippement ou d'accrochage **30** comprenant deux épaulements **31**, diamétralement opposés selon une direction commune qui est orthogonale à l'axe **z-z'** et qui sont disposés en alignement avec deux prolongements **32** de la fourrure **23** dans la position stable de repos **P**_{**1**}**,** telle qu'illustrée par la **fig. 5**.

La tige **25** est, par ailleurs, en appui, par une portée sphérique **35**, sur un siège **36** qui est présenté par le corps de fixation **21**. La portée sphérique **35** est, de préférence, constituée par une pièce indépendante qui est immobilisée axialement et angulairement sur la tige **25**.

Le corps de fixation est, avantageusement, complété par la présence d'un capteur de position **38** s'étendant vers le bas et qui est maintenu en saillie par l'intermédiaire d'un organe de rappel élastique **39**.

La fonction devant être assumée par un tel verrou est celle de permettre l'engagement de la tête **30** dans une mortaise oblongue présentée par un conteneur, tel que **20**, dont la présence est appréciée par l'information délivrée par le capteur de position **39**.

Lorsque la pénétration de la tête **30** est intervenue, la transmission **28** est commandée pour faire tourner l'organe d'accrochage ou d'agrippement **24** de la position **P**_{**1**} à la position **P**_{**2**}**,** de telle manière que les épaulements **31** viennent alors se placer sous les rebords d'appui délimitant la mortaise, établissant ainsi une liaison entre le verrou **16** et le conteneur **20**, comme cela est d'ailleurs connu.

Selon l'invention, il est prévu de mettre en oeuvre, au niveau de la tige **25**, un capteur de contraintes à la traction imposée à l'organe **24**, dans les sens des flèches **f**_{**1**} et **f**_{**2**}**,** dès que le corps de fixation **21** est soulevé dans le sens de la flèche **f**_{**1**}**,** après que la tête **30** a agrippé la mortaise correspondante du conteneur **20**, comme cela vient d'être dit.

Par un tel capteur de contraintes à la traction, il devient possible de disposer d'une information précise, localisée, qui est indépendante des contraintes mécaniques supportées par l'ensemble de la structure porteuse et qui sont de nature à introduire des distorsions quantitatives faussant l'information fournie par les méthodes d'appréciation connues actuellement.

Dans un exemple d'application illustré par la **fig. 6**, le capteur de contraintes, désigné dans son ensemble par la référence **40**, est du type à chambre de compression d'un fluide. Dans cette forme de réalisation, le capteur **40** comprend un chapeau d'appui **41** solidaire axialement et angulairement de la tige **25**, en étant situé entre une tête d'appui **42** solidaire de la tige **25** et le corps **21**. Le chapeau 41 délimite, dans sa face transversale annulaire, opposée à l'embout **26**, une chambre de compression annulaire **43** qui vient coiffer, avec interposition de joints d'étanchéité **44**, un piston annulaire **45** porté par un corps support **46** qui est lié au corps de fixation **21**, par exemple en étant rendu solidaire de la portée sphérique **35**. De préférence, la liaison axiale, entre le chapeau **41** et le piston annulaire **45,** est établie par l'intermédiaire d'une embase **47** liée au chapeau et prenant appui sous un rebord annulaire **48** présenté par le piston **45**.

L'assemblage, tel que décrit ci-dessus, permet de délimiter la chambre **43** qui est dite aveugle, en ce sens qu'elle ne possède, ni orifice d'entrée, ni orifice de sortie et qui est remplie complètement d'un fluide, tel que l'huile hydraulique, dont la montée en pression peut être appréciée par des moyens de mesures **49** qui sont reliés à des moyens **50** de transmission à distance de la variation de pression constatée.

Dans la situation qui vient d'être évoquée et qui correspond à une fonction de levage, la charge, reportée sur les épaulements **31** de la tête **30**, sollicite la tige **25** dans le sens de la flèche **f**_{**2**}**,** de sorte que la tête **42** appuie sur le chapeau **41** qui tend à engager davantage le piston annulaire **45**. Il en résulte une tendance à la réduction de volume de la chambre annulaire **43** et, par suite, à une montée en pression du fluide hydraulique, laquelle est transmise, par le moyen **50**, par exemple, jusqu'à une unité centralisatrice mise à disposition du conducteur chargé de la manoeuvre et occupant la cabine **4** de l'engin **1**.

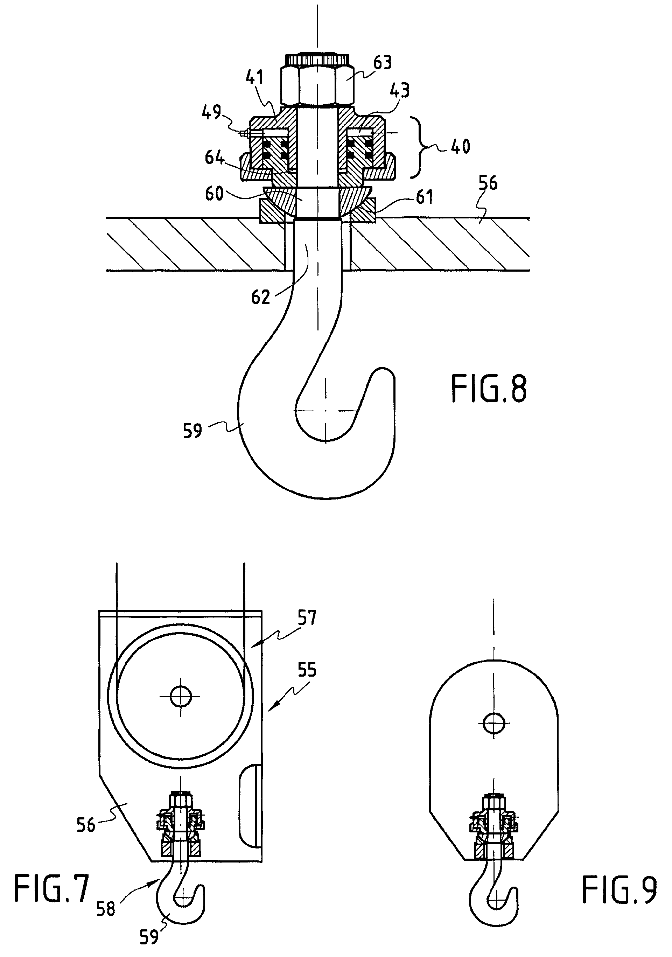

Dans les exemples décrits précédemment, le capteur de contraintes **40** conforme à l'invention est mis en oeuvre sur un organe de levage formant un verrou d'accrochage pour un palonnier d'engin de levage-manutention de conteneurs. Toutefois, conformément à l'invention, le capteur de contraintes **40** peut être mis sur tout autre type d'organe de levage pour l'accrochage de toute charge suspendue d'un engin de manutention. Ainsi, la **fig. 7** illustre un autre exemple de mise en oeuvre du capteur de contraintes **40** sur un organe de levage désigné dans son ensemble par la référence **55** formant un crochet de levage à mouflage pour grue de manutention.

L'organe de levage **55** comprend alors un corps de fixation **56** équipé d'un système de mouflage **57**. Le corps de fixation **56** est, par ailleurs, équipé d'un organe d'accrochage **58** pourvu d'un crochet de manutention **59**.

Comme cela ressort plus particulièrement de la **fig. 8** le corps de fixation **56** comporte des moyens **60** de guidage et d'immobilisation axiale ainsi que des moyens de guidage en rotation **61** formés selon l'exemple illustré par une portée sphérique.

L'organe d'accrochage **58** comprend dans le prolongement du crochet **59**, une tige **62** qui traverse le corps de fixation **56** ainsi qu'un capteur de contraintes **40** conforme à l'invention.

La tige **62** est alors maintenue par les moyens d'immobilisation et de guidage **60** et présente, à l'opposé du crochet **59**, une tête d'appui **63** qui repose sur le chapeau **41** du capteur de contraintes **40** qui présente, par ailleurs, une structure analogue à celle décrite en relation avec la **fig. 6**. Ainsi il doit être noté que le chapeau d'appui **41** et le support **46** sont tous deux traversés par un alésage **64** de réception de la tige de suspension **62** de l'organe d'accrochage **58**. Il est à noter que l'alésage **64** et la chambre de compression **43** sont alors sensiblement co-axiaux.

Selon l'exemple illustré, la chambre annulaire **43** est définie par une gorge annulaire aménagée dans le chapeau d'appui et dans lequel vient s'engager le piston défini par le corps support **46**. Toutefois, selon l'invention, la chambre annulaire **43** pourrait être définie par une gorge annulaire portée par le corps support **46** dans laquelle serait engagé un piston défini par le chapeau d'appui **41**.

Par ailleurs, il doit être noté que selon l'invention, la chambre de compression ne présente pas nécessairement une forme annulaire. Ainsi, selon une variante non représentée, le capteur de contraintes **40** pourrait présenter une pluralité de chambres de compression communiquant entre elles et réparties tout autour de l'alésage **64** de réception de la tige de suspension **62** de l'organe d'accrochage **58**. Ainsi, le capteur de contraintes **40** pourrait présenter trois chambres de compression cylindriques disposées à 120° autour de l'axe de l'alésage **64**.

Bien entendu, une toute autre configuration pourrait être retenue en fonction des conditions de mise en oeuvre du capteur de contraintes conforme à l'invention.

Selon l'exemple illustré à la **fig. 7**, le capteur de contraintes **40** est mis en oeuvre sur un crochet de levage équipé d'un dispositif de mouflage **57**. Bien entendu, le capteur de contraintes **40** peut également être mis en oeuvre sur un système de crochet de levage simple sans dispositif de mouflage tel qu'illustré à la **fig. 9**.

## Revendications

1. Capteur de contraintes pour un engin de levage et/ou de manutention comprenant un organe de levage **(16)** équipé d'un organe d'accrochage **(24)** d'une charge dite suspendue **(20)**,
**caractérisé en ce qu'**il comprend :
- un corps de support **(46)** et un chapeau d'appui **(41)** qui définissent ensemble au moins une chambre de compression **(43)** d'un fluide et qui sont destinés à être interposés entre l'organe de levage **(16)** et l'organe d'accrochage **(24)**,
- des moyens **(49)** de mesure de la pression au sein de la chambre de compression **(43)**.

2. Capteur de contraintes, selon la revendication 1, **caractérisé en ce que** le corps de support **(46)** et le chapeau d'appui **(41)** présentent un alésage destiné à recevoir une tige de suspension **(25)** de l'organe d'accrochage.

3. Capteur de contraintes, selon la revendication 1, **caractérisé en ce que** la chambre de compression **(43)** est remplie d'un fluide hydraulique.

4. Capteur de contraintes, selon la revendication 3, **caractérisé en ce que** la chambre de compression **(43)** est du type aveugle.

5. Capteur de contraintes, selon l'une des revendications 1 à 4, **caractérisé en ce que** la chambre de compression **(43)** présente une forme annulaire.

6. Capteur de contraintes, selon les revendications 2 et 5, **caractérisé en ce que** la chambre de compression **(43)** et l'alésage de réception sont co-axiaux.

7. Capteur de contraintes selon la revendication 5 ou 6, **caractérisé en ce que** la chambre de compression **(43)** est définie par une gorge annulaire aménagée dans le chapeau d'appui **(41)**, dans laquelle est engagé un piston annulaire **(45)** porté par le corps **(46)**.

8. Capteur de contraintes, selon l'une des revendications 1 à 7, **caractérisé en ce qu'**il comprend des moyens **(50)** de transmission à distance de l'information délivrée par les moyens de mesure.

9. Organe de levage pour engin de levage-manutention, du type comprenant au moins un corps de fixation **(21,56)** équipé d'un organe d'accrochage **(24,58)** d'une charge **(20)**, **caractérisé en ce qu'**il comprend un capteur de contraintes **(40)**, selon l'une des revendications 1 à 8, interposé entre le corps de fixation **(21)** et l'organe d'accrochage **(24)**.

10. Organe de levage, selon la revendication 9, **caractérisé en ce qu'**il constitue un verrou peseur **(16)** d'accrochage tournant pour palonnier **(12)** de prise en charge d'un engin de levage-manutention d'un conteneur **(20),** et **en ce que** :
- le corps de fixation **(21)** comporte des moyens **(35,36)** de guidage et d'immobilisation axiale et des moyens **(23)** de guidage en rotation,
- l'organe d'accrochage **(24)** comprend une tige **(25)** de forme générale cylindrique, qui traverse le corps de fixation **(21)** ainsi que le capteur de contraintes **(40)**, qui est maintenue par les moyens de guidage et d'immobilisation et qui comporte, extérieurement au corps, un embout d'accouplement **(26)** avec une transmission **(28)** d'entraînement en rotation alternée et, à l'opposé, une tête épaulée **(30)** destinée à coopérer avec une mortaise oblongue offerte par le conteneur **(20)**.

11. Organe de levage selon la revendication 9, **caractérisé en ce qu'**il constitue un crochet de grue **(55)** et **en ce que** :
- le corps de fixation **(56)** comporte des moyens de guidage et d'immobilisation axiale **(60)** et des moyens de guidage en rotation,
- l'organe d'accrochage **(58)** comprend un crochet **(59)** prolongé par une tige **(62)** qui traverse le corps **(56)** et le capteur de contraintes **(40)** en étant maintenu par les moyens d'immobilisation et de guidage **(60)** et qui présente, à l'opposé du crochet **(59)**, une tête d'appui **(63)** sur le chapeau **(41)** du capteur de contraintes **(40)** interposé entre le corps de fixation **(56)** et l'organe d'accrochage **(59)**.
